# EUROPEAN PATENT APPLICATION

(11) **EP 1 263 154 A2**
(43) Date of publication of application: **04.12.2002**
(21) Application number: 01117979.3
(22) Date of filing: 24.07.2001
(51) Int. Cl.: H04B 10/12, H04J 14/02

(54) **Optical Firewall**

(30) Priority: 01.06.2001 US 872361
(71) Applicant: Redfern Broadband Networks Inc., Wilmington, County of Newcastle, Delaware, 19801 (US)
(72) Inventor: Lauder, Richard, Maroubra, New South Wales 2035 (AU); Halgren, Ross, Collaroy Plateau, New South Wales 2097 (AU)
(74) Representative: VOSSIUS & PARTNER

(57) **Abstract**

An optical network node comprising a plurality of subscriber line connections, a WDM unit having a plurality of WDM channel connections connected to corresponding ones of the subscriber line connections and arranged, in use, to multiplex optical signals carried on selected transmission connections of the WDM channel connections onto a trunk optical network connection, wherein the WDM unit is arranged in a manner such that, in use, each transmission connection filters a specific wavelength associated with that transmission connection, whereby cross talk between the WDM channel connections is reduced.

## Description

The present invention relates broadly to an optical network node design and an optical network.

In existing optical networks incorporating Wavelength Division Multiplexing (WDM) technology subscribers to the network are assigned certain wavelength/s for transmission and reception of optical signals. Usually when the wavelengths are transmitted from the subscribers back to the network, through the network nodes, the wavelengths are multiplexed using passive couplers to combine all of the incoming traffic from the subscribers onto a single fibre trunk to be transmitted out of the network node and into the network. This technique is often preferred so as to minimise cost. It can also minimise the chromatic dispersion and maximise the optical bandwidth of the multiplexing function, however it does so with the penalty of higher insertion loss.

This technique of directing the subscriber's traffic into the network does, however, neglect some important data security considerations, and can be highly undesirable as "cross talk" may occur between the wavelength channels, either because of malfunctioning optical components such as the signal lasers, or where a subscriber manipulates their wavelength input to the network node. Such a manipulation may enable them to access and interfere with other subscriber's wavelengths. This may be achieved by a subscriber representing their wavelength input as that of another subscriber. Such an "impostor" act by a subscriber is highly undesirable in particular when different competing service providers utilize different wavelengths on the same network.

This technique also enables the possibility of an "impostor" user receiving the cross-talk data of the legitimate user. This would be achieved by the impostor user turning off all data on their own channel and receiving cross-talk data within this channel, with high enough signal to noise ratio so as to be able to receive the data information with a low error rate.

In at least preferred embodiments, the present invention seeks to provide an optical network element in which interference between different subscriber wavelengths is minimised, so as to make impossible such interference, either malicious or unintentional, or eavesdropping.

In accordance with a first aspect of the present invention there is provided an optical network node comprising a plurality of subscriber line connections, a WDM unit having a plurality of WDM channel connections connected to corresponding ones of the subscriber line connections and arranged, in use, to multiplex optical signals carried on selected transmission connections of the WDM channel connections onto a trunk optical network connection, wherein the WDM unit is arranged in a manner such that each transmission connection filters a specific wavelength associated with that transmission connection, whereby cross talk between the WDM channel connections is reduced.

The WDM unit preferably comprises one or more of the group of a free space diffraction-grating based multiplexer/demultiplexer, an arrayed waveguide grating, a fibre Bragg grating based device, or a dielectric thin film filter device.

The WDM unit is advantageously further arranged, in use, to de-multiplex a multiplexed optical signal received on the trunk optical network connection onto selected receiving connections of the WDM channel connections.

In another embodiment, the optical network node further comprises a second WDM unit having a second plurality of WDM channel connections connected to corresponding ones of a second plurality of subscriber line connections and arranged, in use, to demultiplex a multiplexed optical signal received on the trunk optical network connection onto selected receiving connections of the second plurality of WDM channel connections.

The network node may further comprise a plurality of subscriber line interface cards and a plurality of trunk line interface cards for optical interfacing between the subscriber line connections and the WDM channel connections.

In one embodiment, the network node further comprises a switch arranged, in use, in a manner such as to be capable of switching transmission directions between the WDM channel connections and individual ones of the subscriber line connections by suitable switching of an optical path configuration between transmitter ports and receiver ports of the subscriber line interface cards and the WDM channel connections.

Pairs of one subscriber line interface card and one trunk line interface card may be implemented on a single card.

Preferably, the switch is disposed between transmitter and receiver ports of the trunk line interface cards on the WDM side thereof and the WDM channel connections and is arranged in a manner such that, in use, the transmission directions are switched by suitable switching of the connectivity between said transmitter and receiver ports of the trunk line interface cards and the WDM channel connections.

The switch may comprise an optical patch panel arranged, in use, to manually switch said connectivity.

Alternatively, the switch may be automated. The automated switch is preferably an automated optical switch.

In accordance with a second aspect of the present invention there is provided an optical network comprising at least one network node as defined in the first aspect of the present invention.

Preferred forms of the present invention will now be described, by way of example only, with reference to the accompanying drawings.
Figure 1 is a schematic diagram illustrating a network node embodying the present invention.
Figure 2 is a schematic diagram illustrating another network node embodying the present invention.
Figure 3 is a schematic diagram illustrating another network node embodying the present invention.
Figure 4 is a schematic diagram illustrating the network node of Figure 3 in a different communication configuration.

The preferred embodiments described provide a network node design in which minimal interference takes place between wavelengths associated with network subscribers. In the preferred embodiments, this is achieved by provision of wavelength selective coupling means in the multiplexing of the individual subscriber transmission signals into the one trunk signal which ultimately enters the optical network. In that way, only preselected wavelength signals can enter the multiplexer unit via the respective ports connected to individual wavelength channels, thereby eliminating the possibility of cross talk/interference from unwanted wavelength components within the individual wavelength channels.

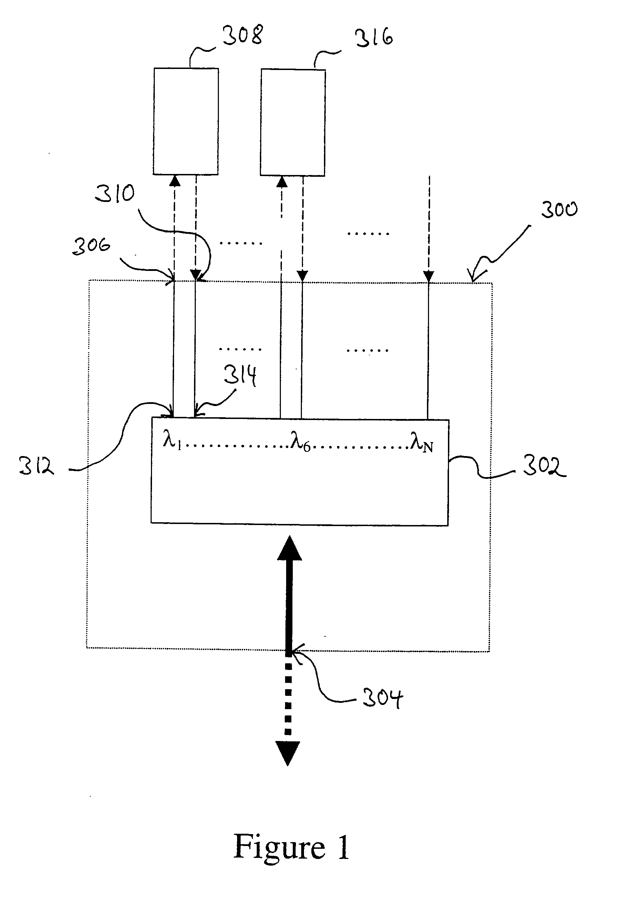

Turning now to Figure 1, a network node 300 embodying the present invention comprises a multiplexing/demultiplexing unit 302 disposed between the trunk fibre optical network traffic 304 and individual wavelength channels e.g. 306 to subscribers, e.g. 308.

In the exemplary embodiment shown in Figure 1, a particular subscriber 308 is provided with two wavelength channels 306, 310 for received and transmitted signals respectively.

The multiplexer/demultiplexer unit 302 in the exemplary embodiment comprises a free-space diffraction-grating, i.e. each output or input port e.g. 312, 314 filters a particular wavelength (λ_{I} to λ_{N}) only.

It will be appreciated by a person skilled in the art that by providing a wavelength selective multiplexer/demultiplexer unit 302, only a pre-allocated wavelength signal entering/exiting the multiplexer/demultiplexer unit 302 through the input or output ports e.g. 312, 314 will be correctly routed to the trunk traffic 304. This minimises the possibility of cross talk either caused by defective or malfunctioning optical components such as optical signal sources or by malicious use of wavelengths allocated to a particular user.

For example, in the exemplary embodiment shown in Figure 1, subscriber 308 could try to feed a transmit signal of wavelength λ₆ along the optical fibre carrying the transmission channel 310 of subscriber 308. As can be seen from Figure 1, λ₆ is the wavelength channel allocated for transmission by a different subscriber 316. However, in the exemplary embodiment only optical signals of the preselected wavelength λ₂ entering the port 314 of the multiplexer/demultiplexer unit 302 connected to the optical fibre carrying the transmitter channel 310 of subscriber 308 will be correctly routed to the trunk traffic 304. Accordingly, subscriber 308 will not be successful in feeding a malicious signal at wavelength λ₆ into the optical network traffic 304.

In the exemplary embodiment shown in Figure 1, optical amplification units which may be used at different locations throughout the network node 300 and the optical network have been omitted for clarity but can be provided where necessary due to transmission requirements within the optical network.

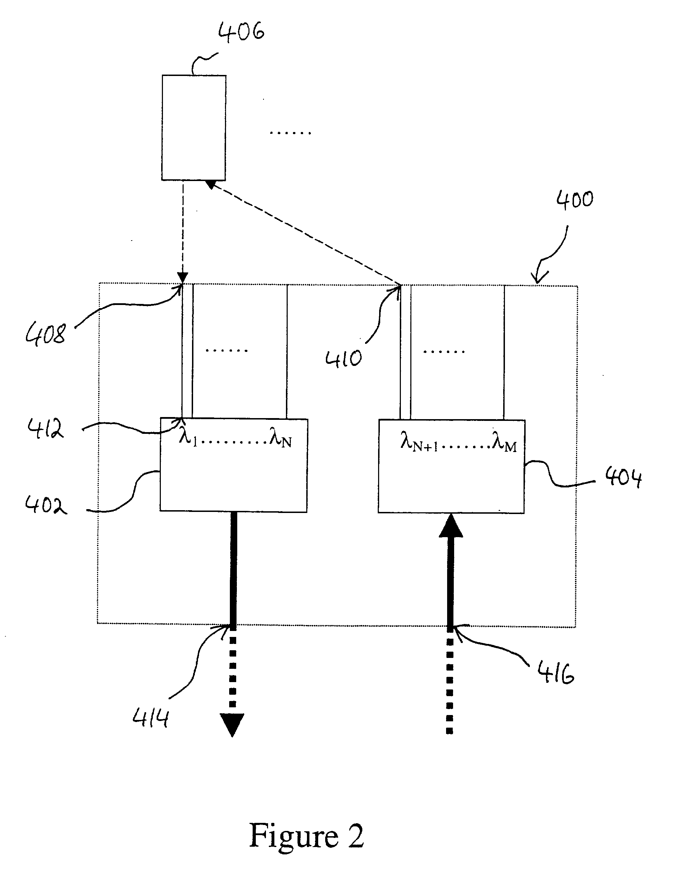

In another embodiment of the present invention shown in Figure 2, an optical network node 400 comprises a first, transmission WDM unit 402, and a second, receiving WDM unit 404.

A plurality of subscribers e.g. 406 each connect to one or more transmission and receiving channel connections, e.g. 408 and 410 respectively.

The first, transmission WDM unit 402 filters, at each of its channel inputs e.g. 412 a particular wavelength (λ₁ to λ_{N}) only, thus minimising the possibility of cross talk between the transmission paths. The multiplexed signal is connected through to the optical network to which the network node 400 is connected via a trunk optical connection 414.

The difference between the embodiment shown in Figure 2 and the embodiment shown in Figure 1 is that in the network node 400 of Figure 2 a second, receiving WDM unit 404 is provided for demultiplexing a multiplexed optical network signal received on the trunk optical network connection 416 from the optical network to which the network node 400 is connected. In the second, receiving WDM unit 404, the signal is demultiplexed into different wavelength channels λ_{N+1} to λ_{M}, which are connected through to the subscribers, e.g. 406 via receiving WDM channel connections e.g. 410. It will be appreciated by a person skilled in the art that the two trunk optical network connections 414, 416 may be combined into a single trunk optical network connection by utilising a suitable transmission direction dependent coupler such as a circulator in a modification to the embodiment shown in Figure 2.

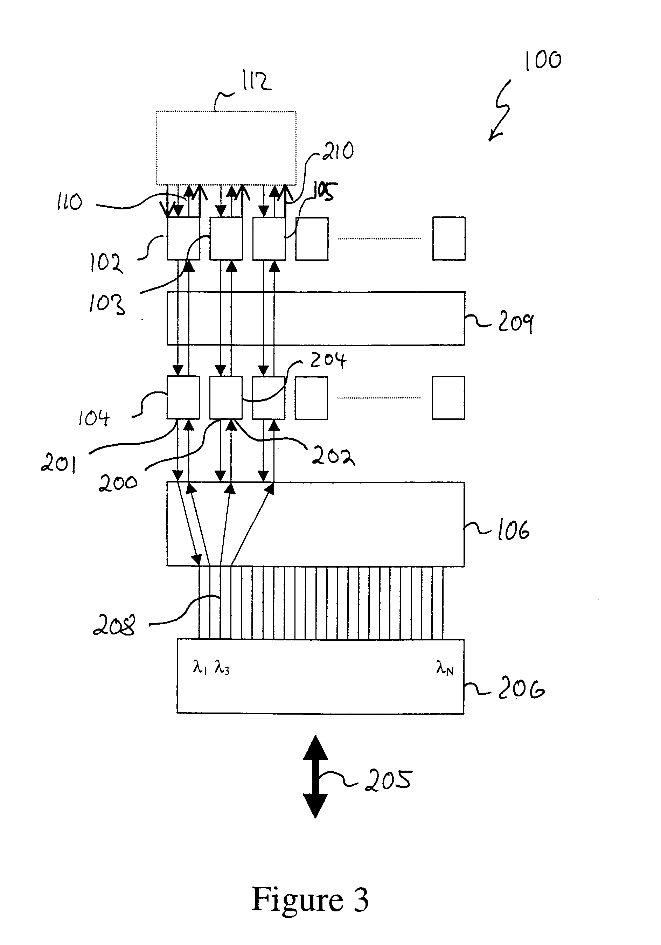

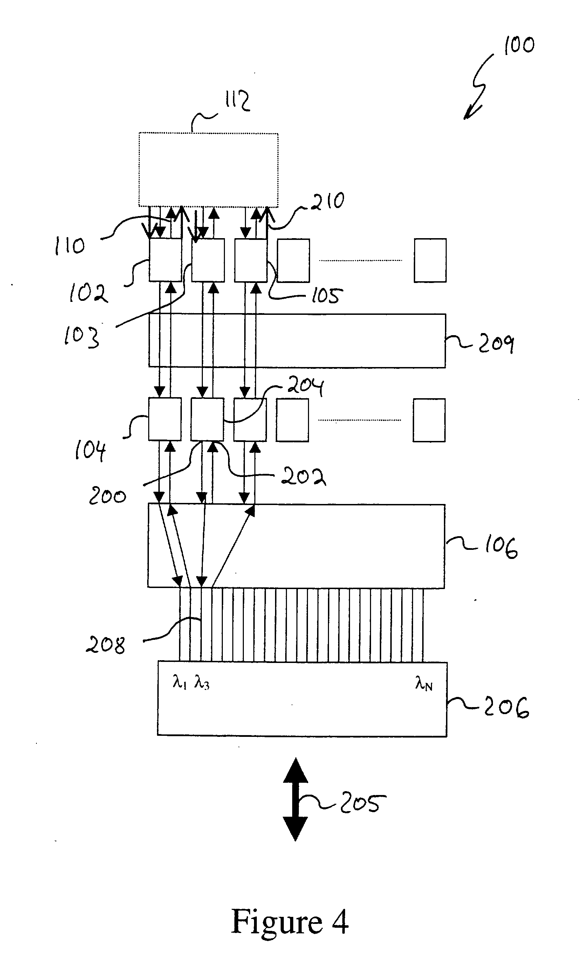

In the following, an upgraded embodiment of the present invention will be described with reference to Figures 3 and 4.

In Figure 3, a network node 100 comprises a plurality of line interface cards eg 102 and a plurality of trunk interface cards, eg 104 and a WDM unit 206. Interconnection between the line interface cards e.g. 102 and the trunk interface cards e.g. 104 is in this embodiment effected through a switch unit 209. In the example embodiment the switch unit 209 is arranged in a manner such that it can connect any one of the line interface cards e.g. 102 to any one of the trunk interface cards e.g. 204. The switch unit 209 can thus be utilised to effect protection switching where e.g. a particular trunk interface card is defective. Preferably, more trunk interface cards are provided than line interface cards to provide M:N protection.

The WDM unit 206 is of a type in which each of optical inputs and outputs e.g. 208 filters a particular wavelength (λ₁ to λ_{N}). In the exemplary embodiment the WDM unit 206 comprises a free-space diffraction grating device.

The network element further comprises a channel switch in the form of an optical patch panel 106. A plurality of line connections e.g. 110 to subscribers is also provided. In the example shown in Figure 3, each subscriber is connected to the node element 100 through subscriber units e.g. 112. The subscriber unit 112 in this exemplary embodiment has three full-duplex point-to-point connections to the network element 100 by way of three subscriber line cards 102, 103 and 105.

To provide a subscriber with an asymmetric communication configuration, only one of the full-duplex connections is utilised with both directions active, in the exemplary embodiment the full-duplex connection effected through line interface card 102. Both full-duplex connections by way of line interface cards 103 and 105 have one direction not active, namely the direction from the subscriber to the network element 100. Accordingly, the subscriber is provided with an asymmetric communication configuration. Active communication directions are indicated by the larger arrows e.g. 210 in Figure 3.

Importantly, it will be appreciated by a person skilled in the art that through provision of the channel switch 106, the fact that connections are inactive does not result in waste of WDM resources. Rather, through suitable switching of the connectivity between transmitters ports e.g. 200 and receiver ports e.g. 202 of the trunk line interface cards e.g. 204, the network element 100 can be configured in a way such that an inactive communication "channel" is not connected to one of the WDM channel connections e.g. 208, thus saving resources in the WDM network.

The set up as shown in Figure 3 satisfies asymmetric bandwidth allocation requirements of a particular subscriber connected to subscriber unit 112. However, the network node 100 embodying the present invention can also provide the capability of, if desired, providing a symmetric bandwidth allocation for communication between the subscriber and the network.

If that is desired, one way of effecting such symmetric bandwidth allocation would be to switch the connection between one of the channel connections 208 of the WDM unit 206 and the receiver port 202 of the trunk line interface card 204 to the transmitter port 200 of that trunk line interface card 204. This configuration is shown in Figure 4.

In this embodiment, this flexibility does not require any additional WDM channel resources, where the trunk laser (not shown) at the transmitter port 200 is set to the wavelength λ3 associated with the channel connection 208 of the effective wavelength independent transmission directions.

By providing the capability of reversing the transmission direction within the network element 100 and the associated WDM network, each data signal carrying wavelength within an optical network does no longer have to have a predetermined transmission direction. Rather, each wavelength can be transmission-direction-independent, thereby enabling a dynamic asymmetric bandwidth provisioning within the optical network.

Returning now to Figure 3, it will be appreciated by the person skilled in the art that in the network node 100 effectively an optical firewall is created between individual subscribers e.g. 112 of the optical network to which the network node 100 is connected. The wavelength selective WDM unit 206 ensures that at each port of the WDM unit 206 only a single wavelength can enter or exit, thus minimising the possibility of cross talk between the optical wavelength channels.

Consider for example, if the trunk laser (not shown) at the transmitter port 201 of trunk interface card 203 was malfunctioning in a way such that it emitted light having other wavelength components than λ₁ and including wavelength components associated with other transmission channels. In a prior art passive coupler configuration, those inadvertent signals would interfere with the "true" transmission signals, and thus jeopardising the integrity of the optical network configuration.

The wavelength selective WDM unit 206 in the network node 100 embodying the present invention ensures that in the case of such a malfunction, only optical signals of the pre-allocated transmission wavelength λ₁ will be added to the optical network traffic 205, whereby the malfunctioning of the trunk laser (not shown) will at the most effect only the particular transmission channel associated with that trunk laser.

It will further be appreciated by the person skilled in the art in the network node 100 the provision of trunk interface cards e.g. 203, 204, which each incorporate trunk lasers for emitting preselected wavelength signals, further "isolates" the subscribers e.g. 112 from the optical network to which the network node 100 is connected. Thus, in the situation where a subscriber would try to feed a transmitted signal into the optical network at a wavelength allocated to a different subscriber, this would not be successful, as control over the wavelength that is being fed into the WDM unit 206 for a particular transmission channel is not controlled by the subscriber 112. Rather, it is "controlled" by the set-up of the network node 100, which is typically under the control of an independent network provider.

It will be appreciated by the person skilled in the art that numerous variations and /or modifications may be made to the present invention as shown in the specific embodiments without departing from the spirit or scope of the invention as broadly described. The present embodiments are, therefore, to be considered in all respects to be illustrative and not restrictive.

In the claims that follow and in the summary of the invention, except where the context requires otherwise due to express language or a necessary implication, the word "comprising" is used in the sense of "including", i.e. the features specified may be associated with further features in various embodiments of the invention.

## Claims

1. An optical network node comprising:
- a plurality of subscriber line connections,
- a WDM unit having a plurality of WDM channel connections connected to corresponding ones of the subscriber line connections and arranged, in use, to multiplex optical signals carried on selected transmission connections of the WDM channel connections onto a trunk optical network connection,
wherein the WDM unit is arranged in a manner such that, in use, each transmission connection filters a specific wavelength associated with that transmission connection, whereby cross talk between the WDM channel connections is reduced.

2. An optical network node as claimed in claim 1, wherein the WDM unit comprises one or more of the group of a free space diffraction-grating based multiplexer/demultiplexer, an arrayed waveguide grating, or a dielectric thin film filter device, a fibre Bragg grating based device.

3. An optical network node as claimed in claims 1 or 2, wherein the WDM unit is further arranged, in use, to de-multiplex a multiplexed optical signal received on the trunk optical network connection onto selected receiving connections of the WDM channel connections.

4. An optical network node as claimed in claim any one of claim 1 to 3, wherein the optical network node further comprises a second WDM unit having a second plurality of WDM channel connections connected to corresponding ones of a second plurality of subscriber line connections and arranged, in use, to demultiplex a multiplexed optical signal received on the trunk optical network connection onto selected receiving connections of the second plurality of WDM channel connections.

5. An optical network node as claimed in claim any one of claims 1 to 4, wherein the network node further comprises a plurality of subscriber line interface cards and a plurality of trunk line interface cards for optical interfacing between the subscriber line connections and the WDM channel connections.

6. An optical network node as claimed in claim 5, wherein the network node further comprises a channel switch arranged, in use, in a manner such as to be capable of switching transmission directions between the WDM channel connections and individual ones of the subscriber line connections by suitable switching of an optical path configuration between transmitter ports and receiver ports of the trunk line interface cards and the WDM channel connections.

7. An optical network node as claimed in claims 5 or 6, wherein pairs of one subscriber line interface card and one trunk line interface card are implemented on a single card.

8. An optical network node as claimed in any one of claims 5 to 7, wherein the network node further comprises a protection switch disposed between the subscriber line interface cards and the trunk line interface cards and arranged in a manner such as to be capable of selectively connecting any one of the subscriber line interface cards to any one of the trunk line interface cards.

9. An optical network node as claimed in any one of claim 6, wherein the channel switch comprises an optical patch panel arranged, in use, to manually switch said connectivity.

10. An optical network node as claimed in claim 6, wherein the channel switch is automated.

11. An optical network node as claimed in claim 10, wherein the automated channel switch is an automated optical channel switch.

12. An optical network comprising at least one network node as defined in the first aspect of the present invention.
